# FASCICULE DE BREVET EUROPEEN

(11) **EP 1 831 117 B1**
(45) Date de publication et mention de la délivrance du brevet: **13.08.2008**
(21) Numéro de dépôt: 05818920.0
(22) Date de dépôt: 09.11.2005
(51) Int. Cl.: C03B 37/16, D01G 1/04

(54) **PROCEDE PERMETTANT LE CHANGEMENT DES ORGANES DE COUPE**
VERFAHREN ZUM ERSATZ VON SCHNEIDELEMENTEN
METHODS FOR REPLACING CUTTING MEMBERS

(30) Priorité: 19.11.2004 FR 0452700
(43) Date de publication de la demande: 12.09.2007
(73) Titulaire: Saint Gobain Vetrotex France S.A., 73000 Chambéry (FR)
(72) Inventeur: FONT, Dominique, F-73190 SAINT BALDOPH (FR); VEUILLEN, Gérard, F-73000 BARBERAZ CHAMBERY (FR)
(74) Mandataire: Joly, Jean-Jacques
(86) Numéro de dépôt international: PCT/FR2005/050939
(87) Numéro de publication internationale: WO 2006/054012

(56) Documents cités:
- US-A- 6 076 442

## Description

La présente invention concerne le domaine de la fabrication de fils coupés à usage technique, en particulier des fils en matière thermoplastique et notamment de fils de verre.

Elle concerne plus spécifiquement un procédé permettant la mise en oeuvre d'une intervention de maintenance, cette intervention de maintenance pouvant consister par exemple en une opération de changement des organes de coupe, un nettoyage, ou toutes autres opérations qui doit être réalisée sans avoir à interrompre le processus de production ainsi qu'un dispositif permettant la mise en oeuvre de ce procédé.

Au sens de l'invention, « sans avoir à interrompre le processus de production » constitue une phase de production durant laquelle les filières produisent des filaments qui sont dirigés vers le coupeur (et non pas vers une mise au déchet), toutefois durant cette phase, la machine de coupe produit éventuellement des fils coupés impropres à la commercialisation en tant que produit fini.

On connaît de nombreux dispositifs susceptibles de réaliser de telles fabrications. Ces systèmes comprennent généralement au moins une filière à partir de laquelle des fils de verre sont étirés et amenés jusque dans un dispositif de coupe constitué par exemple d'un cylindre d'appui ou enclume qui coopère avec un cylindre coupeur équipé de lames régulièrement réparties à sa périphérie.

Le cylindre coupeur est disposé de manière à venir en contact sous pression avec la surface circonférentielle du cylindre d'appui, définissant ainsi une zone de coupe. Au cours de l'opération de coupe de la fibre de verre, la roue de coupe, après un certain temps d'utilisation atteint un niveau d'usure tel que la qualité du fils coupés ne répond plus aux exigences de la production et il convient alors de procéder à son changement.

On procède donc régulièrement à des arrêts de production sur les filières, pour réaliser une opération de maintenance, comme par un exemple un remplacement des roues usées.

Ces arrêts de production induisent une perte de rendement au moins à deux titres : durant la phase de changement des organes de coupe sur la machine de coupe, toute la production des filaments est dirigée vers les rebuts, et lorsque cette opération de maintenance est réalisée, il convient, pour retrouver une production nominale de fils coupés, de préparer une à une chaque filière et de procéder à une opération de relance pour chacune d'entre elle. On définit une phase de relance comme une opération qui consiste à rétablir la continuité de la mèche de filaments entre la filière et le coupeur.

Une première solution visant à réduire les pertes de rendement consiste à associer à une filière ou à un nombre réduit de filières au moins une machine de coupe. Cette solution offre l'avantage d'assurer néanmoins une production réduite de fils coupés à partir des machines de coupe demeurant opérationnelles durant la phase de maintenance qui est opérée sur l'une d'entre elles, par contre cette solution trouve sa limite dans son encombrement. L'association un coupeur/une filière nécessite au voisinage des filières un espace suffisant pour les opérations de maintenance et de relance par l'utilisateur. De plus, on note que l'augmentation prévisible des rendements de production (la tirée) limite l'introduction de machine de coupe supplémentaire (problème d'intégration physique dans une ligne existante).

Une deuxième solution consiste à utiliser les machines de coupe dites « à double tête ». Cette solution est décrite par exemple dans le document EP 0 849 381 et consiste à considérer sur une unique machine 2 têtes de production alternativement soit en production soit en maintenance. L'avantage résidant dans le fait que l'unité de coupe est déjà équipée avec un jeu de roues neuves et que par simple rotation de la machine (suivant un axe vertical), on procède à un changement des organes de coupe dans un temps relativement plus court, puisqu'il n'y a plus à démonter et remonter les roues pendant l'arrêt des filières.

Néanmoins, bien que le changement des organes de coupe s'effectue en temps masqué, il demeure un temps pendent lequel la production de l'ensemble des filières est mise au rebut durant l'opération de pivotement de la machine et durant les phases de relance.

Une troisième solution décrite dans les documents FR0310046 et US6148640 a été envisagé, elle consiste à placer en amont de la machine de coupe une machine d'étirage qui continue d'étirer les filaments pendant que les opérateurs tournent la machine de coupe, on limite ainsi les effets indésirables notamment au niveau de la stabilité thermique des filières, ou des dysfonctionnements au niveau du canal d'approvisionnement.

La présente invention propose une solution aux problèmes évoqués ci-dessus en proposant un procédé permettant une opération de maintenance sur la machine de coupe, comme par exemple le changement des organes de coupe sans avoir à interrompre le processus de production.

Conformément à l'invention le procédé permettant la réalisation d'une intervention de maintenance sur une machine de coupe, notamment un changement des organes de coupe d'une machine de coupe, se caractérise en ce qu'
- on étire au moins un fil dans un premier ensemble coupeur en fonctionnement, ledit premier ensemble coupeur comprenant une roue de coupe et une roue enclume, ledit premier ensemble coupeur étant solidaire d'un châssis monté mobile, notamment en rotation autour d'un axe d'articulation,
- on met en rotation ledit châssis autour de son axe jusqu'à amener un deuxième ensemble coupeur initialement en position de non fonctionnement jusqu'au voisinage du fil, ledit deuxième ensemble coupeur étant solidaire dudit châssis et comprenant une roue de coupe et une roue enclume,
- on met en fonctionnement le deuxième ensemble coupeur et on engage le fil entre la roue de coupe et la roue enclume,
- on met en position de non fonctionnement ledit premier ensemble coupeur.

En utilisant l'un des ensembles coupeur en tant que moyen d'étirage des fils durant toute la phase de mouvement autour de son axe d'articulation de la machine de coupe, il est possible de passer d'un ensemble de coupe à l'autre sans avoir à relancer les fils.

Dans d'autres modes de réalisation préférés de l'invention, on peut éventuellement avoir recours en outre à l'une et/ou à l'autre des dispositions suivantes :
- on procède à une séparation des fils en amont du premier ensemble coupeur entre deux moyens de séparation,
- on procède à un rapprochement des fils entre les deux moyens de séparation,
- on procède à un guidage du fil lors de la rotation du châssis autour de son axe, ce guidage étant réalisé par des moyens de guidage solidaires dudit châssis,
- ledit châssis est mis en mouvement toujours dans le même sens,
- ledit châssis est mis en rotation autour d'un axe vertical.

Selon un autre aspect de l'invention celle-ci vise une machine de coupe destinée à la fabrication de fils coupés à usage technique, en particulier des fils en matière thermoplastique et notamment de fils de verre, ladite machine comprenant un châssis tridimensionnel possédant trois côtés ou plus, un premier ensemble coupeur solidaire d'un des côtés dudit châssis comprenant une roue de coupe et une roue enclume, un second ensemble coupeur comprenant une roue de coupe et une roue enclume, ledit second ensemble coupeur étant solidaire de l'un des autres côtés dudit châssis, ledit châssis étant monté mobile sur un axe d'articulation, notamment de rotation, caractérisée en ce que le châssis comporte des moyens de guidage du fil adaptés pour guider le fil sur son trajet entre le premier ensemble coupeur et le deuxième ensemble coupeur lors d'un mouvement dudit châssis autour de son axe.

Dans d'autres modes de réalisation préférés de l'invention, on peut éventuellement avoir recours en outre à l'une et/ou à l'autre des dispositions suivantes :
- le châssis est mis en rotation autour d'un axe vertical,
- le châssis est un cube ou un polyèdre rectangulaire,
- le premier ensemble coupeur et le second ensemble coupeur sont positionnés de part et d'autre d'un axe de symétrie du châssis,
- le premier ensemble coupeur et le second ensemble coupeur sont positionnés respectivement sur des côtés adjacents dudit châssis,
- le premier ensemble coupeur et le second ensemble coupeur sont positionnés respectivement sur des côtés parallèles dudit châssis,
- les moyens de guidage sont positionnés en amont et en aval des premier et/ou second ensembles coupeur,
- les moyens de guidage comportent des roulettes montées mobiles autour d'un axe sensiblement vertical.

D'autres caractéristiques, détails, avantages de la présente invention apparaîtront mieux à la lecture de la description qui va suivre, faite à titre illustratif et nullement limitatif, en référence aux dessins annexés sur lesquels :
- la figure 1 est une vue schématique d'ensemble, simplifiée, d'une installation incorporant une machine de coupe selon l'invention et
- les figure 2 à 8 illustrent les diverses étapes du processus visant au changement des organes de coupe, selon les modalités de l'invention.

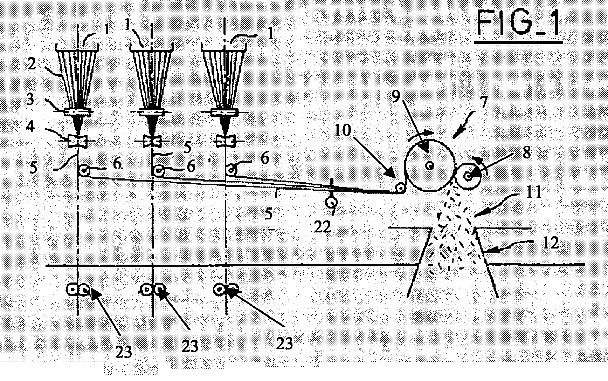

Sur la figure 1 apparaît donc, de façon schématique, une installation de production de fils coupés qui comprend au moins une filière 1 alimentée, de façon connue, à partir de verre fondu ou de billes de verre délivrées par un dispositif d'alimentation non représenté. Ces filières, par exemple en platine rhodié, sont chauffées couramment par effet joule. Elles sont munies à leur partie inférieure d'une pluralité d'orifices à partir desquels une pluralité de filaments 2 (ici certains sont représentés en traits mixtes) peuvent être étirés mécaniquement.

Les filaments 2 sont généralement soumis à un ensimage c'est-à-dire à un traitement chimique destiné à leur appliquer un produit apportant au fil une cohésion et une lubrification suffisante et une aptitude à son utilisation ultérieure en terme de processabilité et de compatibilité renfort/matrice, grâce à un rouleau ensimeur 3.

Les filaments issus d'une filière sont ensuite réunis par des roulettes d'assemblage 4 en au moins un fil 5 qui est dévié par un moyen tel qu'une roulette dite de déviation ou de renvoi 6 afin de les envoyer vers une machine de coupe 7 située en aval de l'ensemble filière 1.

Par ailleurs, la disposition des principaux constituants de l'installation illustrée en figure 1 est telle que le trajet des filaments 2 puis des fils 5 est globalement contenu dans un plan vertical, depuis la filière, jusqu'à la machine de coupe 7. Plus précisément les filaments 2 ont d'abord une direction sensiblement verticale depuis la filière jusqu'à la roulette de déviation ou de renvoi 6 puis les fils 5 décrivent un trajet sensiblement horizontal jusqu'à leur entrée dans la machine de coupe 7. Une roulette d'embarrage 10 peut être prévue à l'entrée de la machine afin de garantir un arc d'enroulement des fils sur la roue-enclume suffisamment grand pour assurer l'entraînement desdits fils par la force de friction.

La filière 1 et le rouleau ensimeur 3 sont disposés l'un au-dessus de l'autre par exemple dans une même cellule de fibrage qui repose sur un plancher sur lequel repose la machine de coupe.

La roulette de déviation 6 est disposée à l'aplomb du rouleau ensimeur 3. Une ouverture, réalisée dans le plancher permet le passage du faisceau de filaments en aval du rouleau ensimeur. Cette ouverture peut aussi permettre d'évacuer les fibres pendant les casses filière.

Ainsi les filaments 2 présentent un trajet sensiblement vertical, depuis la filière 1 jusqu'à la roulette de déviation 6 qui dévie les fils d'environ 90° pour les mener horizontalement (ou sensiblement horizontalement) vers la machine de coupe 7.

La machine de coupe 7 comprend d'abord une roue porte lames 8 (ou roue de coupe) et une roue enclume 9. Des détails de construction de ces roues sont donnés dans la littérature antérieure, notamment dans la publication EP 0 040 145. Les roues de coupe et enclume sont au contact l'une de l'autre en légère pression, de telle sorte que dans la zone de contact, qui est aussi la zone de coupe, la déformation de l'élastomère entraîne l'affleurement des lames de la roue porte-lames. Dans la pratique, une seule des deux roues est motrice, l'autre étant entraînée à son contact. De façon préférée, c'est la roue porte-lames qui est motrice. L'entraînement est conduit au moyen d'un moteur électrique, de préférence à transmission directe par le moyeu de la roue concernée.

Les fils coupés 11 sont récupérés dans un dispositif de réception 12. Dans les intervalles de fonctionnement de la découpe, en particulier lorsqu'une filière est remise en route, les fils sont tirés par un système d'étirage 23, communément appelé tire-fil (cf figure 1). L'étirage des fils, préalablement à la mise en route de la découpe ou au moment d'une relance d'une filière, est nécessaire pour l'établissement d'un régime d'équilibre de la filière et donc pour garantir des qualités de fils bien déterminées.

En régime de marche, la traction sur les fils est opérée par la machine de coupe 7 dont l'une au moins de l'enclume 9 et de la roue porte-lames 8 est motorisée.

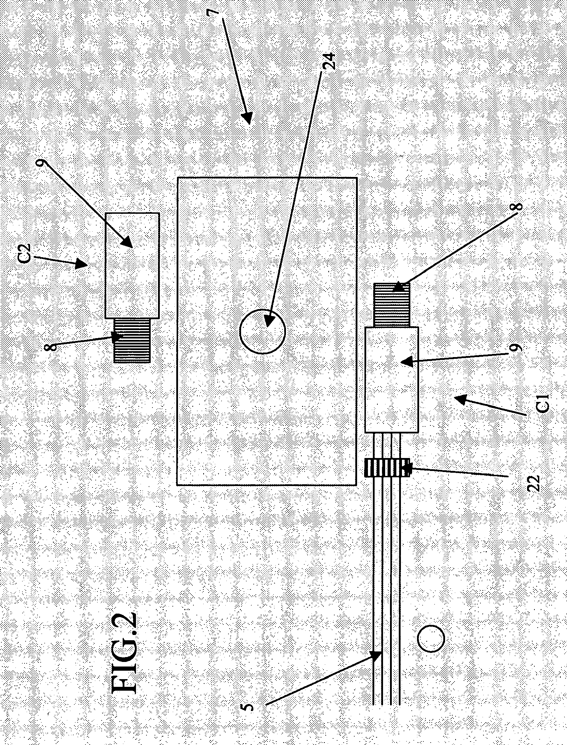

Selon un mode préféré de réalisation, la machine de coupe visible en figure 1 est en fait une machine de coupe à tête multiple. Les figures 2 à 8 sont des vues de dessus de cette machine de coupe à différents stades du cycle de fonctionnement. La machine de coupe à tête multiple comprend au moins deux ensembles coupeurs (un premier C1 et un second C2) distincts montés sur un châssis, le châssis étant monté mobile en rotation autour d'un axe 24 solidaire d'une embase disposée sur le plancher de l'installation, cet axe de rotation 24 étant préférentiellement un axe vertical.

D'une manière préférée, le châssis s'inscrit dans un cube ou plus globalement selon un polyèdre rectangulaire, et les ensembles coupeurs C1, C2 sont positionnés selon un axe de symétrie de ce châssis (dans l'exemple représenté, l'axe de symétrie est l'axe de rotation). Dans l'exemple représenté en figure 2, chaque ensemble coupeur C1, C2 est positionné respectivement selon deux côtés ou deux faces parallèles du châssis. En variante (non représenté sur les figures), les premier et second ensembles coupeurs C1, C2 sont disposés selon des côtés adjacents de la machine de coupe 7.

Comme on peut le voir sur la figure 2, une nappe de fils 5 provenant d'une filière 1 ou d'une partie de filière est étirée puis coupée par l'intermédiaire d'un premier ensemble coupeur C1, les fils 5 passant entre la roue de coupe 8 et la roue enclume 9 de ce premier ensemble coupeur C1 qui est en position de production, ces fils étant guidés depuis la roue de renvoi 6 jusqu'au premier ensemble coupeur C1 par l'intermédiaire d'un premier séparateur 22. Comme on peut le voir sur la figure 2, le premier séparateur 22 permet de séparer les fils 5 entre eux et d'éviter qu'ils provoquent des défauts de coupe lors de leur passage entre la roue de coupe 8 et la roue enclume 9.

Lorsque la qualité de la coupe se dégrade , il convient alors de changer les organes de coupe selon des modalités qui seront explicitées en détail ci-après.

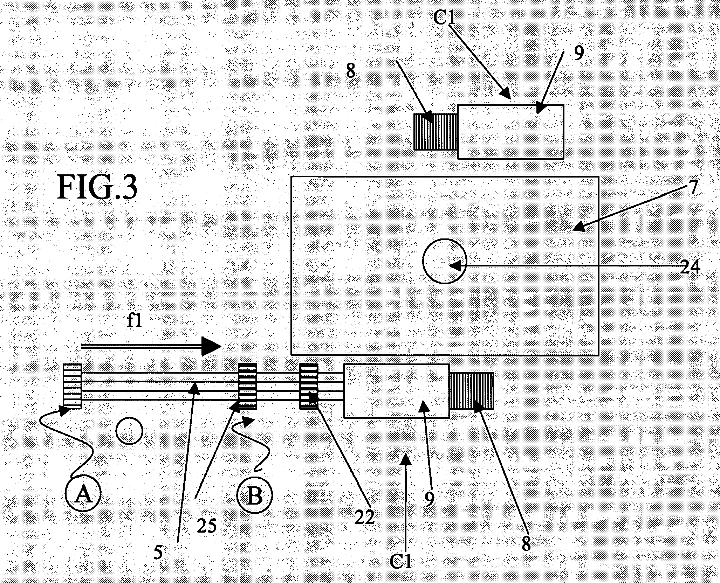

La figure 3 illustre une phase transitoire préalable aux changements des outils de coupe.

Sur cette figure 3 est représenté un second séparateur 25 identique au précédent. Ce deuxième séparateur 25 en attente de fonctionnement est désengagé. Il n'interfère pas avec le trajet des fils 5 venant des filières 1.

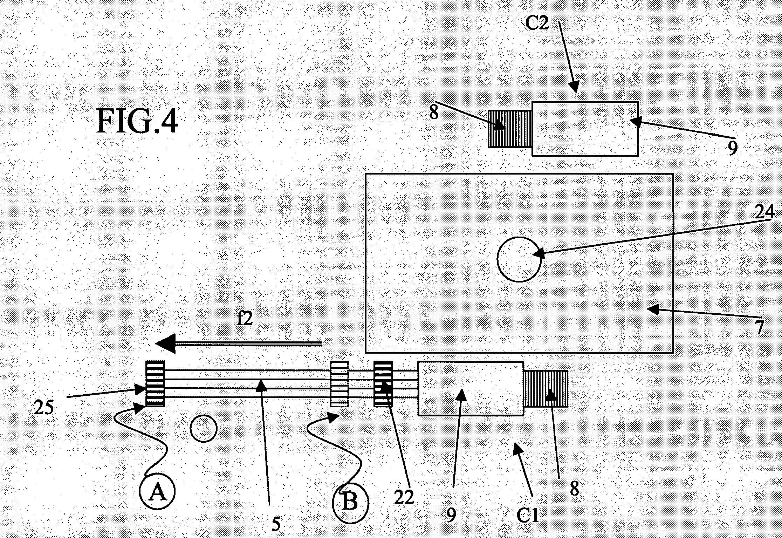

Initialement positionné en amont du premier séparateur 22 (position repérée A sur la figure 3), d'une manière manuelle ou motorisée (ce dernier peut être monté sur un vérin par exemple), le second séparateur 25 se rapproche du premier séparateur 22 (position repérée B sur la figure 3), ce mouvement de rapprochement (A,B) (en fait le séparateur 25 prend une position B juste avant la position occupée par le séparateur 22) est illustré par une flèche f1. Lorsque le second séparateur 25 est au voisinage amont du premier séparateur 22, celui-ci est alors engagé et interfère avec le trajet des fils 5. En figure 4, le second séparateur 25 s'éloigne du premier séparateur 22 et retourne à la position A qu'il occupait initialement (ce déplacement est représenté par une flèche f2) en figure 3, néanmoins le second séparateur 25 demeure engagé avec le trajet des fils 5, il en est de même pour le premier séparateur 22.

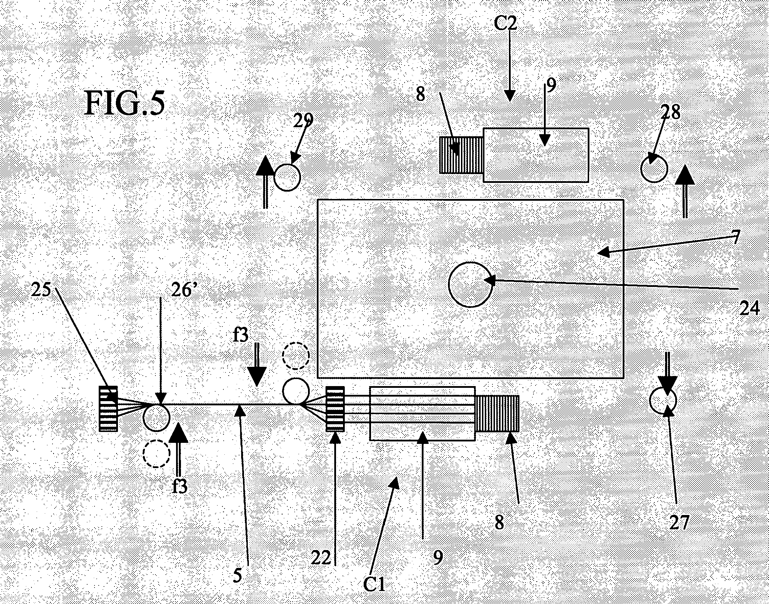

Dans cette configuration, la machine de coupe 7 va pouvoir effectuer un mouvement de rotation autour de son axe 24 de la manière suivante (on pourra se reporter à la séquence de figures 5-6-7-8). Cette mise en rotation est effectuée d'une manière connue, par tout actionneur hydraulique, électrique, pneumatique, ou manuellement si besoin.

Comme on peut le voir au niveau de la figure 5, avant de procéder à la rotation de la machine de coupe 7 autour de son axe de rotation vertical 24, on procède au rapprochement simultané de deux moyens de rapprochement 26, 26' de manière à rassembler ou rapprocher entre eux les fils 5 cheminant entre le premier séparateur 22 et le second séparateur 25, ce rapprochement des moyens de rapprochement 26, 26' est illustré par les flèches f3 (entre une position non rapprochée illustrée en pointillé à une position rapprochée illustrée en trait plein).

Ces moyens de rapprochement 26 solidaires du châssis sont constitués par exemple par une roulette ou un cylindre en forme de diabolo monté mobile en rotation sur un axe vertical.

Le moyen de rapprochement 26' situé au voisinage immédiat du deuxième séparateur 25 constitue également un moyen de guidage situé en amont du premier ensemble coupeur C1, le trajet du fil venant effleurer la surface externe de la roulette.

D'autres moyens de guidage 27, 28, 29 identiques aux précédents sont positionnés, comme cela apparaît en figure 5, en aval du premier ensemble de coupe C1, et en amont et en aval du deuxième ensemble de coupe C2, soit sensiblement au niveau de chacun des angles de la machine de coupe 7.

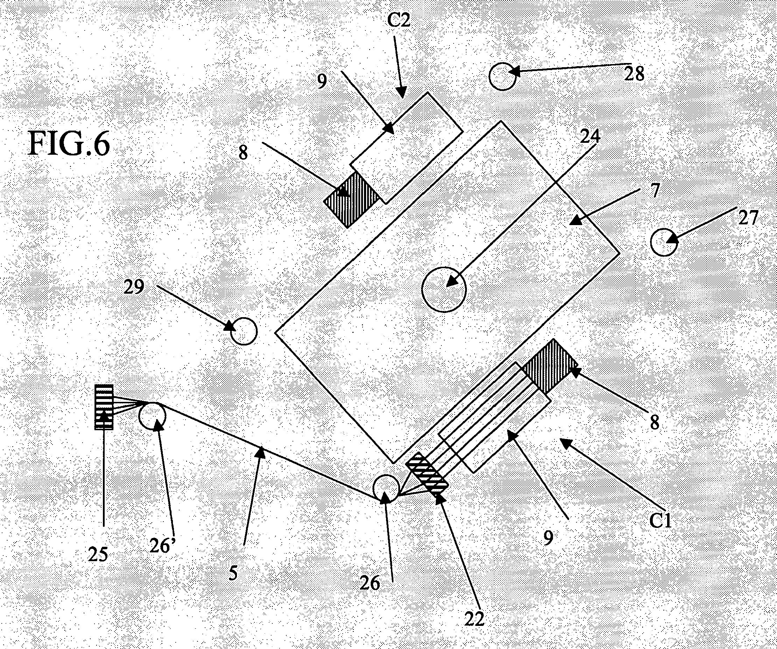

En figure 6, lors de la rotation de la machine de coupe 7, les moyens de guidage 26, 27, 28, 29 (les roulettes) prennent tour à tour en charge le guidage des fils 5, ceux-ci continuant d'être coupés par le premier ensemble de coupe C1.

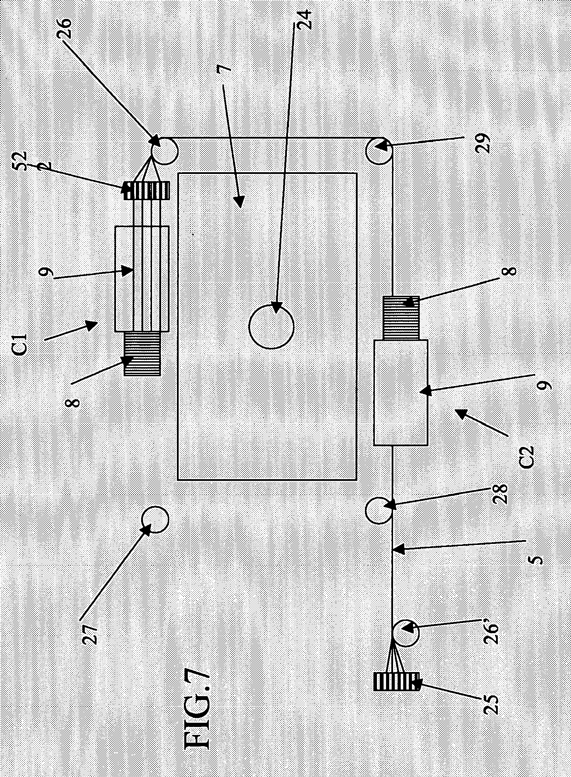

En figure 7, la rotation complète autour de son axe de rotation 24 de la machine de coupe 7 a eu lieu. Le premier ensemble coupeur C1 a pris la place du deuxième ensemble coupeur C2 et réciproquement. Le premier ensemble coupeur C1 durant toute la rotation de la machine de coupe 7 a été maintenu en fonctionnement, il a donc continué à étirer les fils 5 durant le processus de rotation, ces fils 5 étant par ailleurs simultanément coupés et récupérés en dessous de la machine de coupe 7.

L'étape suivante consiste à mettre en fonctionnement le deuxième ensemble de coupe C2 et à procéder à la relance automatique des fils sur le deuxième de coupe C2. Cette phase de relance automatique fait l'objet d'une demande de brevet parallèle FR 04 52285 déposée le 07/10/2004 par la société demanderesse à laquelle il conviendra de se rapporter.

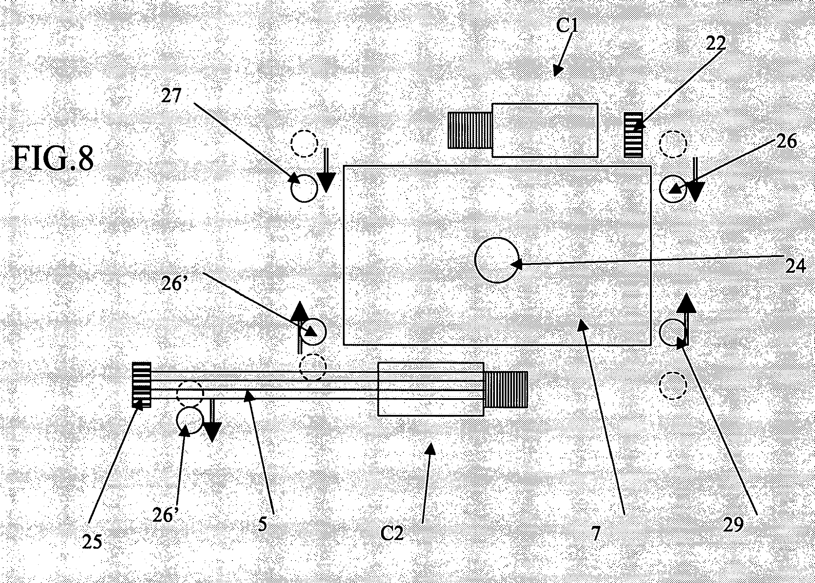

En figure 8, on a représenté l'installation après cette phase de relance automatique.

On remarque que les fils 5 sont maintenant étirés et coupés par le deuxième ensemble de coupe C2 et que les fils 5 se trouvent bien séparés, les moyens de rapprochement 26, 26' ayant repris leur position de repos, position qu'ils occupaient en figure 5.

Le premier ensemble coupeur C1 peut alors mis hors fonctionnement afin que l'on puisse procéder à une opération de maintenance sur celui-ci, pouvant consister par exemple en un changement des organes de coupe (roue enclume et/ou roue de coupe)

Comme on a pu le voir, les différentes étapes de ce processus garantissent que l'on puisse intervenir sur la machine de coupe sans avoir à interrompre la production des fils venant des filières, ce qui n'était pas possible avec les machines de coupe double tête connues de l'art antérieur, même ces dernières nécessitaient une mise au rebut pendant la rotation de la machine.

Il va de soi que l'invention telle que précédemment décrite a été illustrée à partir d'un mode de fonctionnement incluant une rotation de la machine de coupe autour d'un de ses axes de symétrie (en l'occurrence un axe vertical de rotation). On comprend alors que cette invention inclut également celles pour lesquelles la rotation autour d'un axe peut se décomposer en une combinaison de mouvements élémentaires incluant des translations, des rotations durant laquelle le(s) fil(s) venant des filières vont passés sans casse d'un premier ensemble de coupe à un deuxième ensemble de coupe, revenant à un mode de fonctionnement équivalent à celui qui a été illustré par les figures 2 à 8. Ainsi en variante de réalisation, la machine de coupe peut effectuer un circuit en forme de carré.

Selon encore une autre variante de réalisation, la machine de coupe munie de ces deux ensembles de coupeur est disposée sur un chemin de roulement sur lequel elle peut se déplacer jusqu'à une plateforme tournante, adaptée pour lui permettre d'effectuer un demi tour, afin de faire passer le premier ensemble coupeur d'une position de fonctionnement à une position de maintenance et réciproquement pour le deuxième ensemble coupeur (d'une position maintenance à une position de fonctionnement). Une fois le demi tour effectué, la machine coupe, grâce à un mouvement de sens opposé sur le chemin de roulement reprend sa position initiale.

Par ailleurs, le passage automatique des fils d'un premier ensemble de coupe à un deuxième ensemble de coupe, sans avoir à interrompre la production, ou plus exactement à devoir la diriger vers les déchets, est très économique en terme d'intervention humaine : en principe, l'ensemble des étapes peut être géré par un seul opérateur, ce qui n'était pas le cas avec les machines de coupe double tête connues de l'art antérieur. Les fils coupés durant cette phase de maintenance peuvent être récupérés et valorisés

## Revendications

1. Procédé permettant la réalisation d'une intervention de maintenance sur une machine de coupe (7), notamment un changement des organes de coupe d'une machine de coupe, **caractérisé en ce qu'**
- on étire au moins un fil (5) dans un premier ensemble coupeur (C1) en fonctionnement, ledit premier ensemble coupeur (C1) comprenant une roue de coupe (8) et une roue enclume (9), ledit premier ensemble coupeur (C1) étant solidaire d'un châssis monté mobile, notamment en rotation, autour d'un axe d'articulation (24),
- on met en rotation ledit châssis autour de son axe (24) jusqu'à amener un deuxième ensemble coupeur (C2) initialement en position de non fonctionnement jusqu'au voisinage du fil (5), ledit deuxième ensemble coupeur (C2) étant solidaire dudit châssis et comprenant une roue de coupe (8) et une roue enclume (9),
- on met en fonctionnement le deuxième ensemble coupeur (C2) et on engage le fil (5) entre la roue de coupe (8) et la roue enclume (9),
- on met en position de non fonctionnement ledit premier ensemble coupeur (C1).

2. Procédé selon la revendication 1, **caractérisé en ce qu'**on procède à une séparation des fils (5) en amont du premier ensemble coupeur (C1) entre deux moyens de séparation (22, 25).

3. Procédé selon l'une des revendications 1 ou 2, **caractérisé en ce qu'**on procède à un rapprochement des fils (5) entre les deux moyens de séparation (22, 25).

4. Procédé selon l'une des revendications précédentes, **caractérisé en qu'**on procède à un guidage du fil (5) lors de la rotation du châssis autour de son axe (24), ce guidage étant réalisé par des moyens de guidage (26, 27, 28, 29) solidaires dudit châssis.

5. Procédé selon l'une des revendications précédentes, **caractérisé en que** ledit châssis est toujours mis en mouvement, notamment de rotation, dans le même sens.

6. Procédé selon l'une des revendications précédentes, **caractérisé en que** ledit châssis est mis en rotation autour d'un axe vertical.

7. Machine de coupe (7) destinée à la fabrication de fils (5) coupés à usage technique, en particulier des fils en matière thermoplastique et notamment de fils de verre, ladite machine (7) comprenant un châssis tridimensionnel possédant trois côtés ou plus, un premier ensemble coupeur (C1) solidaire d'un des côtés dudit châssis comprenant une roue de coupe (8) et une roue enclume (9), un second ensemble coupeur (C2) comprenant une roue de coupe (8) et une roue enclume (9), ledit second ensemble coupeur (C2) étant solidaire de l'un des autres côtés dudit châssis, ledit châssis étant monté mobile sur un axe d'articulation (24), **caractérisée en ce que** le châssis comporte des moyens de guidage (26, 27, 28, 29) du fil (5) adaptés pour guider le fil (5) sur son trajet entre le premier ensemble coupeur (C1) et le deuxième ensemble coupeur (C2) lors d'un mouvement dudit châssis autour de son axe (24).

8. Machine de coupe selon la revendication 7, **caractérisée en ce que** le châssis est mis en rotation autour d'un axe vertical.

9. Machine de coupe selon la revendication 7, **caractérisée en ce que** le châssis est un cube ou un polyèdre rectangulaire.

10. Machine de coupe selon l'une des revendications 7 à 9, **caractérisée en ce que** le premier ensemble coupeur (C1) et le second ensemble coupeur (C2) sont positionnés de part et d'autre d'un axe de symétrie du châssis.

11. Machine de coupe selon la revendication 10, **caractérisée en ce que** le premier ensemble coupeur (C1) et le second ensemble coupeur (c2) sont positionnés respectivement sur des côtés adjacents dudit châssis.

12. Machine de coupe selon la revendication 10, **caractérisée en ce que** le premier ensemble coupeur (C1) et le second ensemble coupeur (C2) sont positionnés respectivement sur des côtés parallèles dudit châssis.

13. Machine de coupe selon l'une quelconque des revendications 7 à 12, **caractérisée en ce que** les moyens de guidage (26, 27, 28, 29) sont positionnés en amont et en aval des premier et/ou second ensembles coupeur (C1, C2).

14. Machine de coupe selon la revendication 13, **caractérisée en ce que** les moyens de guidage (26, 27, 28, 29) comporte des roulettes montées mobiles autour d'un axe sensiblement vertical.

## Claims

1. A method for performing a maintenance operation on a cutting machine (7), notably for replacing cutting members of a cutting machine, **characterized in that**
- at least one wire (5) is drawn in a first operating cutting assembly (C1), said first cutting assembly (C1) comprising a cutting wheel (8) and an anvil wheel (9), said first cutting assembly (C1) being integral with a chassis movably, notably rotatably mounted around a pivot axis (24),
- said chassis is set into rotation a round its axis (24) so as to bring a second cutting assembly (C2) initially in a non-operating position right up to the vicinity of the wire (5), said second cutting assembly (C2) being integral with said chassis and comprising a cutting wheel (8) and an anvil wheel (9),
- the second cutting assembly (C2) is set into operation and the wire (5) is engaged between the cutting wheel (8) and the anvil wheel (9),
- said first cutting assembly (C1) is set into a non - operating position.

2. The method according to claim 1, **characterized in that** one proceeds with a separation of the wires (5) upstream from the first cutting assembly (C1) between two separation means (22, 25).

3. The method according to any of claims 1 or 2, **characterized in that** one proceeds with bringing the wires (5) closer between both separation means (22, 25).

4. The method according to any of the preceding claims, **characterized in that** one proceeds with guiding the wire (5) during the rotation of the chassis around its axis (24), this guiding being performed by guiding means (26 , 27, 28, 29) integral with said chassis.

5. The method according to any of the preceding claims, **characterized in that** said chassis is always set into motion, notably into rotation, in the same direction.

6. The method according to any of the preceding claims, **characterized in that** said chassis is set into rotation around a vertical axis.

7. A cutting machine (7) intended for making cut wires (5) for a technical use, in particular thermoplastic material wires and notably glass wires, said machine (7) comprising a three-dimensional chassis having three sides or more, a first cutting assembly (C1) integral with one of the sides of said chassis comprising a cutting wheel (8) and an anvil wheel (9), a second cutting assembly (C2) comprising a cutting wheel (8) and an anvil wheel (9), said second cutting assembly (C2) being integral with one of the other sides of said chassis, said chassis being movably mounted on a pivot axis (24), **characterized in that** the chassis includes means (26, 27, 28, 29) for guiding the wire (5), adapted so as to guide the wire (5) on its path between the first cutting assembly (C1) and the second cutting assembly (C2) during a movement of said chassis around its axis (24).

8. The cutting machine according to claim 7, **characterized in that** the chassis is set into rotation around a vertical axis.

9. The cutting machine according to claim 7, **characterized in that** the chassis is a cube or a rectangular polyhedron.

10. The cutting machine according to any of claims 7 to 9, **characterized in that** the first cutting assembly (C1) and the second cutting assembly (C2) are positioned on either side of an axis of symmetry of the chassis.

11. The cutting machine according to claim 10, **characterized in that** the first cutting assembly (C1) and the second cutting assembly (C2) are respectively positioned on adjacent sides of said chassis.

12. The cutting machine ac cording to claim 10, **characterized in that** the first cutting assembly (C1) and the second cutting assembly (C2) are respectively positioned on parallel sides of said chassis.

13. The cutting machine according to any of claims 7 to 12, **characterized in that** the guiding means (26,27,28,29) are positioned upstream and downstream from the first and/or the second cutting assemblies (C1, C2).

14. The cutting machine according to claim 13, **characterized in that** the guiding means (26, 27, 28, 29) include rollers movably mounted around a substantially vertical axis.

## Patentansprüche

1. Verfahren, das die Durchführung eines Wartungseingriffs an einer Schneidemaschine (7), insbesondere ein Auswechseln der Schneidorgane einer Schneidemaschine ermöglicht, **dadurch gekennzeichnet, daß**
- wenigstens ein Faden (5) in eine in Betrieb befindliche erste Schneideeinheit (C1) gezogen wird, wobei die erste Schneideeinheit (C1) ein Schneidrad (8) und ein Amboßrad (9) aufweist, wobei die erste Schneideeinheit (C1) mit einem Gestell fest verbunden ist, das um eine Gelenkachse (24) beweglich, insbesondere drehbeweglich angebracht ist,
- das Gestell um seine Achse (24) in Rotation versetzt wird, bis eine anfangs in der Nichtbetriebsstellung befindliche zweite Schneideeinheit (C2) bis in die Nähe des Fadens (5) gebracht wird, wobei die zweite Schneideeinheit (C2) mit dem Gestell fest verbunden ist und ein Schneidrad (8) sowie ein Amboßrad (9) umfaßt,
- die zweite Schneideeinheit (C2) in Betrieb gesetzt wird und der Faden (5) zwischen das Schneidrad (8) und das Amboßrad (9) eingeführt wird,
- die erste Schneideeinheit (C1) in die Nichtbetriebsstellung gebracht wird.

2. Verfahren nach Anspruch 1, **dadurch gekennzeichnet, daß** eine Trennung der Fäden (5) stromaufwärts der ersten Schneideeinheit (C1) zwischen zwei Trennmitteln (22, 25) vollzogen wird.

3. Verfahren nach einem der Ansprüche 1 oder 2, **dadurch gekennzeichnet, daß** die Fäden (5) zwischen den zwei Trennmitteln (22, 25) einander genähert werden.

4. Verfahren nach einem der vorhergehenden Ansprüche, **dadurch gekennzeichnet, daß** der Faden (5) während der Rotation des Gestells um seine Achse (24) geführt wird, wobei dieses Führen durch mit dem Gestell fest verbundene Führungsmittel (26, 27, 28, 29) erfolgt.

5. Verfahren nach einem der vorhergehenden Ansprüche, **dadurch gekennzeichnet, daß** das Gestell stets in der gleichen Richtung in Bewegung, insbesondere in Drehbewegung versetzt Wird.

6. Verfahren nach einem der vorhergehenden Ansprüche, **dadurch gekennzeichnet, daß** das Gestell um eine vertikale Achse in Rotation versetzt wird.

7. Schneidemaschine (7), die für die Herstellung geschnittener Fäden (5) für den technischen Gebrauch, insbesondere Thermoplastfasern und vor allem Glasfasern bestimmt ist, wobei die Maschine (7) folgendes umfaßt, nämlich ein dreidimensionales Gestell mit drei oder mehr Seiten, eine erste Schneideeinheit (C1), welche mit einer der Seiten des Gestells fest verbunden ist und ein Schneidrad (8) sowie ein Amboßrad (9) aufweist, eine zweite Schneideeinheit (C2), die ein Schneidrad (8) und ein Amboßrad (9) aufweist, wobei die zweite Schneideeinheit (C2) mit einer der anderen Seiten des Gestells fest verbunden ist, wobei das Gestell um eine Gelenkachse (24) beweglich angebracht ist, **dadurch gekennzeichnet, daß** das Gestell Mittel (26, 27, 28, 29) zum Führen des Fadens (5) umfaßt, die geeignet sind, den Faden (5) auf seinem Weg zwischen der ersten Schneideeinheit (C1) und der zweiten Schneideeinheit (C2) bei einer Bewegung des Gestells um seine Achse (24) zu führen.

8. Schneidemaschine nach Anspruch 7, **dadurch gekennzeichnet, daß** das Gestell um eine vertikale Achse in Rotation versetzt wird.

9. Schneidemaschine nach Anspruch 7, **dadurch gekennzeichnet, daß** das Gestell ein Würfel oder ein rechteckiges Polyeder ist.

10. Schneidemaschine nach einem der Ansprüche 7 bis 9, **dadurch gekennzeichnet, daß** die erste Schneideeinheit (C1) und die zweite Schneideeinheit (C2) auf beiden Seiten einer Symmetrieachse des Gestells angeordnet sind.

11. Schneidemaschine nach Anspruch 10, **dadurch gekennzeichnet, daß** die erste Schneideeinheit (C1) und die zweite Schneideeinheit (C2) jeweils auf benachbarten Seiten des Gestells angeordnet sind.

12. Schneidemaschine nach Anspruch 10, **dadurch gekennzeichnet, daß** die erste Schneideeinheit (C1) und die zweite Schneideeinheit (C2) jeweils auf parallelen Seiten des Gestells angeordnet sind.

13. Schneidemaschine nach irgendeinem der Ansprüche 7 bis 12, **dadurch gekennzeichnet, daß** die Führungsmittel (26, 27, 28, 29) stromaufwärts und stromabwärts der ersten und/oder zweiten Schneideeinheit (C1, C2) angeordnet sind.

14. Schneidemaschine nach Anspruch 13, **dadurch gekennzeichnet, daß** die Führungsmittel (26, 27, 28, 29) Rollen aufweisen, die um eine im wesentlichen vertikale Achse beweglich angebracht sind.
